# EUROPÄISCHE PATENTANMELDUNG

(11) **EP 1 314 910 A1**
(43) Veröffentlichungstag der Anmeldung: **28.05.2003**
(21) Anmeldenummer: 01127691.2
(22) Anmeldetag: 21.11.2001
(51) Int. Cl.: F16H 37/08

(54) **Einrichtung zur Erzeugung einer Drehbewegung**

(71) Anmelder: Honeywell International, Inc., Morristown, New Jersey 07962-1057 (US)
(72) Erfinder: König, Bernhard, 86399 Bobingen (DE)
(74) Vertreter: Torggler, Paul Norbert, Dr.

(57) **Zusammenfassung**

Einrichtung zur Erzeugung einer Drehbewegung einer Welle (1) mit einer ersten, einen ersten Antriebspfad antreibenden Drehbewegungserzeugungseinrichtung (13) und einer zweiten, einen zweiten Antriebspfad antreibenden Drehbewegungserzeugungseinrichtung (14), wobei an der Welle (1) mindestens ein drehbares Planetenrad (2) angeordnet ist und der erste Antriebspfad über eine Innenverzahnung (9) eines Hohlrades (3) in das Planetenrad (2) eingreift und der zweite Antriebspfad über eine Außenverzahnung (10) eines Sonnenrades (5) in das Planetenrad (2) eingreift.

## Beschreibung

Die vorliegende Erfindung betrifft eine Einrichtung zur Erzeugung einer Drehbewegung einer Welle mit einer ersten, einen ersten Antriebspfad antreibenden Drehbewegungserzeugungseinrichtung und einer zweiten, einen zweiten Antriebspfad antreibenden Drehbewegungserzeugungseinrichtung.

Beim Stand der Technik ist es bereits z.B. aus der EP 0 913 600 A1 bekannt, eine Welle über mehrere Antriebspfade in eine Drehbewegung zu versetzen. Die Verwendung von mehreren voneinander unabhängig angetriebenen Antriebspfaden dient hierbei im wesentlichen dazu, eine Redundanz des Gesamtantriebs zu schaffen, damit beim Ausfall eines Antriebspfades die Welle weiterhin durch die anderen verbleibenden Antriebspfade gedreht werden kann. Solche sogenannten redundanten Antriebe finden vor allem in Bereichen mit erhöhten Sicherheitsanforderungen wie z.B. beim Flugzeugbau oder dergleichen Bereichen ihre Anwendung. Der Nachteil der bisher bekannten gattungsgemäßen redundanten Antriebe liegt darin, daß sie in der Regel einen relativ großen Platzbedarf aufweisen und über verhältnismäßig viele bewegliche Teile verfügen.

Aufgabe der vorliegenden Erfindung ist es somit, eine weiter verbesserte redundante Einrichtung zur Erzeugung einer Drehbewegung einer Welle zu schaffen, bei der die oben genannten Nachteile beseitigt sind.

Dies wird erfindungsgemäß dadurch erreicht, daß an der Welle mindestens ein drehbares Planetenrad angeordnet ist und der erste Antriebspfad über eine Innenverzahnung eines Hohlrades in das Planetenrad eingreift und der zweite Antriebspfad über eine Außenverzahnung eines Sonnenrades in das Planetenrad eingreift.

Erfindungsgemäß wird hierdurch ein redundanter Antrieb zur Erzeugung einer Drehbewegung einer Welle zur Verfügung gestellt, bei dem beim Ausfall eines Antriebspfades der jeweils verbleibende andere Antriebspfad die Drehung der Welle im vollen Umfang aufrecht erhalten kann. Die erfindungsgemäße Einrichtung hat hierbei den Vorteil, daß sie zum einen sehr klein gebaut werden kann und zum anderen keine speziellen Kupplungen oder ähnlich aufwendige Vorrichtungen benötigt, welche beim Ausfall eines Antriebspfads der Umstellung von einem ersten zu einem zweiten Betriebszustand dienen. Dadurch wird ein besonders betriebssicherer redundanter Antrieb zur Verfügung gestellt. Darüber hinaus ist die Anzahl der beweglichen Teile deutlich reduziert.

Eine besonders günstige Ausführungsvariante sieht vor, daß die gedachte Rotationsachse des Hohlrades des ersten Antriebspfades koaxial zur Welle angeordnet ist. Darüber hinaus ist es ebenfalls günstig, daß die gedachte Rotationsachse des Sonnenrades des zweiten Antriebspfades koaxial zur Welle angeordnet ist. Durch diese koaxiale Ausrichtung der Rotationsachsen des Hohlrades und/oder des Sonnenrades zur Welle ist wiederum eine besonders einfache, stabile und kleinbauende Anordnung der beiden Antriebspfade innerhalb der Einrichtung möglich.

Des weiteren ist es günstig, daß mehrere, vorzugsweise 5, drehbare Planetenräder an der Welle angeordnet sind. Durch die Verwendung mehrerer Planetenräder wird die Redundanz der Einrichtung weiter erhöht. Dies liegt darin begründet, daß bei der Anordnung mehrerer Planetenräder das einzelne Planetenrad weniger Kräfte aufnehmen muß und vor allem beim Ausfall eines Planetenrades z.B. durch Bruch oder ähnliches sich die verbleibende Restlast auf mehrere Planetenräder besser verteilt. Hierbei ist es wiederum günstig, daß eine ungerade Anzahl von drehbaren Planetenrädern an der Welle angeordnet ist. Eine ungerade Anzahl von Planetenräders sorgt zum einen für eine verbesserte Laufruhe und zum anderen für eine besonders günstige Kräfteverteilung innerhalb des Gesamtantriebs.

Besonders günstig ist es, daß alle Planetenräder sowohl in das Hohlrad des ersten Antriebspfades als auch in das Sonnenrad des zweiten Antriebspfades eingreifen. Hierdurch wird sowohl eine optimale Redundanz beim Ausfall eines Antriebes oder eines Planetenrades als auch eine besonders kompakte Bauweise gewährleistet.

Eine besonders bevorzugte Variante sieht vor, daß die erste Drehbewegungserzeugungseinrichtung über eine vorzugsweise selbstarretierende Schneckenwelle das Hohlrad des ersten Antriebspfades antreibt. Ebenso ist es günstig, vorzusehen, daß die zweite Drehbewegungserzeugungseinrichtung über eine vorzugsweise selbstarretierende Schneckenwelle das Sonnenrad des zweiten Antriebspfades antreibt. Durch die Verwendung von Schneckenwellen zur Übertragung der Drehbewegung auf die jeweiligen Antriebspfade wird sichergestellt, daß beim Ausfall eines der beiden Antriebspfade das Sonnenrad oder das Hohlrad automatisch arretiert werden. Dies ist besonders günstig, da durch die Verwendung von Schneckenwellen zum Arretieren keinerlei gesonderte Bremsen, Klemmen oder ähnliches nötig sind, was wiederum die Betriebssicherheit der gesamten Einrichtung erhöht sowie eine konstruktiv einfache Lösung darstellt. Darüber hinaus kann die Einrichtung dadurch besonders klein gebaut sein, da kein Platz für gesonderte Bremsen, Klemmen oder ähnliches vorzusehen ist.

Grundsätzlich können verschiedene Drehbewegungserzeugungseinrichtungen verwendet werden. Besonders günstige Ausführungsformen sehen hierbei vor, daß die erste und/oder die zweite Drehbewegungserzeugungseinrichtung ein Elektromotor und/oder ein Verbrennungsmotor und/oder eine Handkurbel ist (sind). Die Wahl der jeweiligen Drehbewegungserzeugungseinrichtung hängt hierbei von dem Verwendungszweck, für den die Einrichtung vorgesehen ist, ab.

Eine weitere günstige Variante sieht vor, daß die Einrichtung eine Drehzahlregeleinrichtung zur Abstimmung der Drehzahl der ersten Drehbewegungserzeugungseinrichtung mit der Drehzahl der zweiten Drehbewegungserzeugungseinrichtung aufweist. Diese Drehzahlregeleinrichtung kann mechanisch in Form eines Getriebes bevorzugt jedoch als elektrische oder elektronische Regeleinrichtung ausgebildet sein. Ihre Aufgabe ist es, unabhängig von ihrer Ausprägung die beiden Drehbewegungserzeugungseinrichtungen in der Art zu regeln, daß diese in definierten und konstanten, aber im Normalbetrieb voneinander verschiedenen Drehzahlen betrieben werden. Hierdurch wird unter anderem der Verschleiß an den Zahnrädern im Normalbetrieb besonders gut minimiert.

Weitere Merkmale und Einzelheiten der vorliegenden Erfindung ergeben sich aus der nachfolgenden Figurenbeschreibung. Dabei zeigt:
- Fig. 1: eine erfindungsgemäße Ausführungsform in einer perspektivischen Ansicht mit aufgeschnittenem Gehäuse,
- Fig. 2: eine Detaildarstellung zum ersten Antriebspfad in einer Seitenansicht
- Fig. 3: eine Detaildarstellung zum zweiten Antriebspfad in einer Seitenansicht und
- Fig. 4: das in Fig. 1 dargestellte Ausführungsbeispiel mit geschlossenem Gehäuse und zwei daran montierten Elektromotoren.

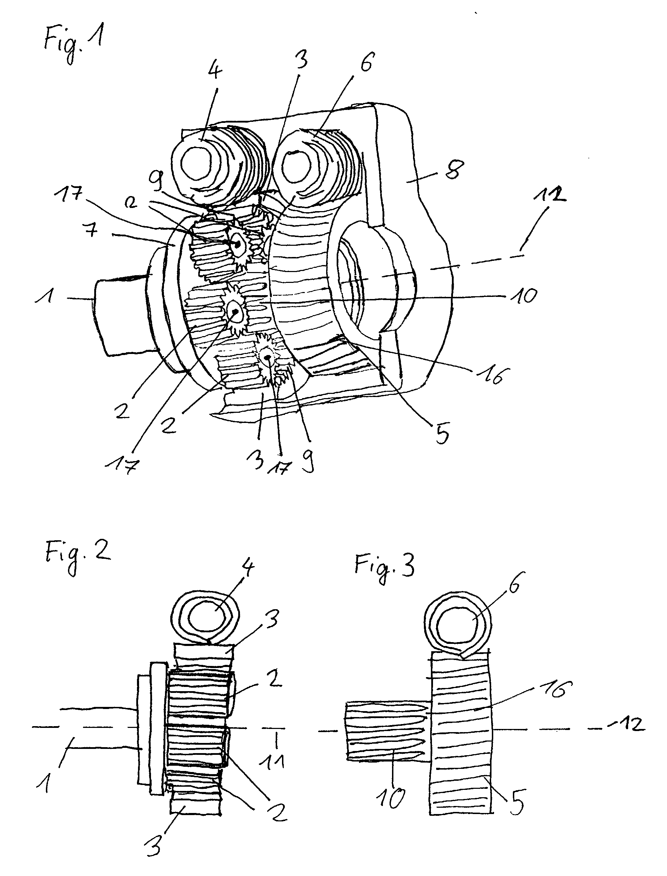

Bei der in Fig. 1 dargestellten Ausführungsvariante sind innerhalb eines Gehäuses 8, welches hier aufgeschnitten dargestellt ist, ein erster und ein zweiter Antriebspfad angeordnet, wobei diese zur Erzeugung einer Drehbewegung der Welle 1 dienen. Eine in Fig. 1 nicht näher dargestellte erste Drehbewegungserzeugungseinrichtung 13 treibt vorzugsweise direkt den ersten Antriebspfad an. Dieser erste Antriebspfad besteht aus der Schneckenwelle 4 und dem Hohlrad 3. Die erste Drehbewegungserzeugungseinrichtung 13 (hier ein Elektromotor) dreht die Schneckenwelle 4. Die Drehbewegung der Schneckenwelle 4 bewirkt über ein außen im Hohlrad angeordnetes Gewinde eine Drehbewegung des Hohlrades 3 um seine gedachte Rotationsachse 11. Das Hohlrad 3 weist wiederum eine Innenverzahnung 9 auf, welche in die Außenverzahnung der Planetenräder 2 eingreift, sodaß die Drehbewegung der ersten Drehbewegungserzeugungseinrichtung 13 über den ersten Antriebspfad in der Weise übertragen wird, daß sie in einer Drehbewegung der Planetenräder 2 resultiert. In Fig. 2 ist der erste Antriebspfad noch einmal in einer Seitenansicht dargestellt.

Die zweite Drehbewegungseinrichtung 14 treibt den in Fig. 3 in einer Seitenansicht dargestellten zweiten Antriebspfad an. Dieser weist wiederum eine Schneckenwelle 6 auf, welche in eine Schneckenaußenverzahnung 16 des Sonnenrades 5 eingreift. Die von der Drehbewegungserzeugungseinrichtung 14 (z.B. ebenfalls ein Elektromotor) erzeugte Drehbewegung wird vorzugsweise direkt über die Schneckenwelle 6 auf das Sonnenrad 5 übertragen und führt somit zu einer Rotationsbewegung des Sonnenrades 5 um seine gedachte Rotationsachse 12. Diese Rotationsbewegung wird wiederum über die Außenverzahnung 10 auf die in diese Außenverzahnung 10 eingreifenden Planetenräder 2 übertragen. Die Achsen 17 der Planetenräder 2 sind auf einer Grundplatte 7 ortsfest befestigt, welche wiederum starr mit der anzutreibenden Welle 1 verbunden ist. Die Planetenräder 2 können jeweils sowohl eine Rotation um ihre Achsen 17 ausführen als auch mit der Welle um deren Rotationsachse drehen. Das Hohlrad 3 und das Planetenrad 5 sind in der Art angeordnet, daß ihre gedachten Rotationsachsen 11 und 12 mit der Rotationsachse der Welle 1 zusammenfallen.

Im Normalbetrieb wird sowohl über den ersten Antriebspfad als auch über den zweiten Antriebspfad eine Drehbewegung auf die Welle 1 übertragen. Hierbei treibt der Elektromotor 13 die Schneckenwelle 4 und das Hohlrad 3 an, während die durch Elektromotor 14 erzeugte Drehbewegung über die Schneckenwelle 6 auf das Sonnenrad 5 übertragen wird. Diese beiden Drehbewegungen werden über die Außenverzahnung 10 des Sonnenrades 5 und über die Innenverzahnung 9 des Hohlrades 3 auf die Planetenräder 2 übertragen. Über eine ungerade Anzahl von Planetenrädern (hier 5) wird das Getriebe an dieser Stelle zu einem Planetengetriebe. Der Abtrieb auf die Welle 1 erfolgt hierbei über die als Sternrad ausgebildete Grundplatte 7, an welcher die Achsen 17 der Planetenräder 2 angeordnet sind, woraus letztendlich eine Drehbewegung der Welle 1 hervorgeht. Durch unterschiedliche Drehzahlen am Hohlrad 3 und am Sonnenrad 5 findet ein Abwälzen der Planetenräder 2 statt, um eine gleichmäßige Belastung der Planetenräder 2 zu gewährleisten.

Besonders günstig ist hierbei die Verwendung der Schneckenwellen 4 und 6, da diese selbsthemmend bzw. selbstarretierend sind. Durch sie können Endlagen ohne zusätzliche Bremsen oder Klemmen beim Stillstand der ersten oder zweiten Drehbewegungserzeugungseinrichtung 13 oder 14 gehalten werden.

Fällt der erste Antriebspfad aus, so wird das Hohlrad 3 über die selbsthemmenden Eigenschaften des aus Schneckenwelle 4 und Außenverzahnung des Hohlrades 3 gebildeten Schneckenantriebs arretiert und übernimmt die Funktion eines feststehenden Außenrades eines normalen Planetengetriebes. Hierbei treibt der zweite Antriebspfad über die Schneckenwelle 6 und das Sonnenrad 5 die Planetenräder 2 an, wobei sich die Planetenräder 2 über das Hohlrad 3 abwälzen und so ein Drehmoment auf die Welle 1 übertragen.

Beim Ausfall des Antriebspfades 2 wird das Sonnenrad 5 über die Schneckenwelle 2 mittels deren selbsthemmender Wirkung arretiert und übernimmt dadurch die Funktion eines feststehenden Sonnenrades eines normalen Planetengetriebes. Über den Antriebspfad 1 wird das Hohlrad 3 angetrieben. Die Planetenräder 2 werden über das Hohlrad 3 in eine Drehbewegung versetzt und wälzen sich über das Sonnenrad 5 ab, wodurch wiederum ein Drehmoment auf die Welle 1 übertragen wird.

Bei Zahnbruch im Bereich der Planetenräder 3 ist vorgesehen, daß der erste und der zweite Antriebspfad ohne Drehzahlunterschied das Drehmoment über die restlichen im Eingriff befindlichen Zahnräder auf die Welle 1 übertragen.

Darüber hinaus können noch Funktionstest der Motoren 13 und 14 durchgeführt werden, indem an einem Pfad die Drehrichtung geändert wird, sodaß resultierend keine Drehung der Welle 1 stattfindet. Die Regelung der Drehzahlen der ersten Drehbewegungserzeugungseinrichtung 13 und der zweiten Drehbewegungserzeugungseinrichtung 14 kann über verschiedene beim Stand der Technik bekannte Drehzahlregeleinrichtung 15 erfolgen.

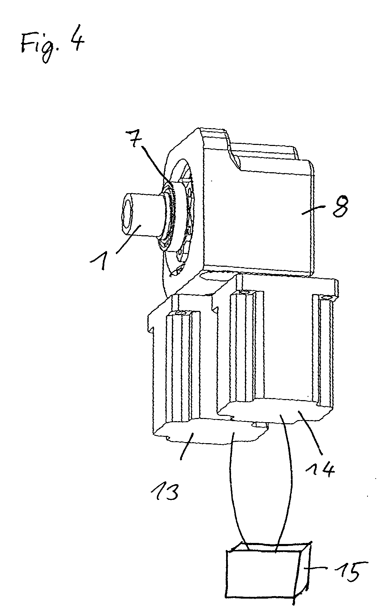

In leichter Abwandlung des in den Fig. 1 bis 4 dargestellten Ausführungsbeispiels kann auch vorgesehen sein, daß die Welle 1 zusammen mit einem der Antriebspfade (erster oder zweiter) zum Antrieb und der andere Antriebspfad als Abtrieb verwendet wird. Hierbei ist es jedoch wichtig, daß die Welle 1 über eine selbstarretierende Schneckenwelle angetrieben wird, während in dem zum Abtrieb verwendeten Antriebspfad (erster oder zweiter) keine Schneckenwelle angeordnet ist, da diese den Abtrieb blockieren würde. Die alternativen Konstruktions- und Betriebsvarianten lassen sich sowohl mit dem ersten als auch mit dem zweiten Antriebspfad als Abtrieb realisieren.

Neben anderen Ausführungsvarianten der erfindungsgemäßen Einrichtung ist besonders zu erwähnen, daß Modifikationen der in Fig. 1 bis 4 gezeigten Einrichtung möglich sind, sodaß auch mehr als zwei Antriebspfade erfindungsgemäß zur Erzeugung einer Drehbewegung der Welle 1 verwendet werden können. Hierbei sind besonders Reihenschaltungen und Parallelschaltungen von leicht modifizierten Varianten der in Fig. 1 bis 4 gezeigten Einrichtung denkbar.

## Patentansprüche

1. Einrichtung zur Erzeugung einer Drehbewegung einer Welle mit einer ersten, einen ersten Antriebspfad antreibenden Drehbewegungserzeugungseinrichtung und einer zweiten, einen zweiten Antriebspfad antreibenden Drehbewegungserzeugungseinrichtung, **dadurch gekennzeichnet, daß** an der Welle (1) mindestens ein drehbares Planetenrad (2) angeordnet ist und der erste Antriebspfad über eine Innenverzahnung (9) eines Hohlrades (3) in das Planetenrad (2) eingreift und der zweite Antriebspfad über eine Außenverzahnung (10) eines Sonnenrades (5) in das Planetenrad (2) eingreift.

2. Einrichtung nach Anspruch 1, **dadurch gekennzeichnet, daß** die gedachte Rotationsachse (11) des Hohlrades (3) des ersten Antriebspfades koaxial zur Welle (1) angeordnet ist.

3. Einrichtung nach einem der Ansprüche 1 oder 2, **dadurch gekennzeichnet, daß** die gedachte Rotationsachse (12) des Sonnenrades (5) des zweiten Antriebspfades koaxial zur Welle (1) angeordnet ist.

4. Einrichtung nach einem der Ansprüche 1 bis 3, **dadurch gekennzeichnet, daß** mehrere, vorzugsweise 5, drehbare Planetenräder (2) an der Welle (1) angeordnet sind.

5. Einrichtung nach einem der Ansprüche 1 bis 4, **dadurch gekennzeichnet, daß** eine ungerade Anzahl von drehbaren Planetenrädern (2) an der Welle (1) angeordnet ist.

6. Einrichtung nach einem der Ansprüche 1 bis 5, **dadurch gekennzeichnet, daß** alle Planetenräder (2) sowohl in das Hohlrad (3) des ersten Antriebspfades als auch in das Sonnenrad (5) des zweiten Antriebspfades eingreifen.

7. Einrichtung zur Erzeugung einer Drehbewegung einer Welle mit einer ersten, einen ersten Antriebspfad antreibenden Drehbewegungserzeugungseinrichtung und einer zweiten, einen zweiten Antriebspfad antreibenden Drehbewegungserzeugungseinrichtung, insbesondere nach einem der Ansprüche 1 bis 6, **dadurch gekennzeichnet, daß** die erste Drehbewegungserzeugungseinrichtung (13) über eine vorzugsweise selbstarretierende Schneckenwelle (4) das Hohlrad (3) des ersten Antriebspfades antreibt.

8. Einrichtung zur Erzeugung einer Drehbewegung einer Welle mit einer ersten, einen ersten Antriebspfad antreibenden Drehbewegungserzeugungseinrichtung und einer zweiten, einen zweiten Antriebspfad antreibenden Drehbewegungserzeugungseinrichtung, insbesondere nach einem der Ansprüche 1 bis 7, **dadurch gekennzeichnet, daß** die zweite Drehbewegungserzeugungseinrichtung (14) über eine vorzugsweise selbstarretierende Schneckenwelle (6) das Sonnenrad (5) des zweiten Antriebspfades antreibt.

9. Einrichtung nach einem der Ansprüche 1 bis 8, **dadurch gekennzeichnet, daß** die erste (13) und/oder die zweite Drehbewegungserzeugungseinrichtung (14) ein Elektromotor und/oder ein Verbrennungsmotor und/oder eine Handkurbel ist (sind).

10. Einrichtung nach einem der Ansprüche 1 bis 9, **dadurch gekennzeichnet, daß** sie eine Drehzahlregeleinrichtung (15) zur Abstimmung der Drehzahl der ersten Drehbewegungserzeugungseinrichtung (13) mit der Drehzahl der zweiten Drehbewegungserzeugungseinrichtung (14) aufweist.
